# EUROPÄISCHE PATENTSCHRIFT

(11) **EP 2 047 182 B1**
(45) Veröffentlichungstag und Bekanntmachung des Hinweises auf die Patenterteilung: **16.08.2017**
(21) Anmeldenummer: 07822244.5
(22) Anmeldetag: 06.11.2007
(51) Int. Cl.: F24J 2/07, F24J 2/38, F24J 2/54, G01S 3/786, G06K 9/20

(54) **VERFAHREN ZUR REGELUNG DER AUSRICHTUNG EINES HELIOSTATEN AUF EINEN RECEIVER, HELIOSTATENVORRICHTUNG UND SOLARKRAFTWERK**
METHOD FOR CONTROLLING THE ORIENTATION OF A HELIOSTAT ON A RECEIVER, HELIOSTAT APPARATUS AND SOLAR POWER PLANT
PROCÉDÉ DE RÉGULATION DE L'ORIENTATION D'UN HÉLIOSTAT SUR UN RÉCEPTEUR, DISPOSITIF D'HÉLIOSTAT ET CENTRALE SOLAIRE

(30) Priorität: 13.11.2006 DE 102006053758
(43) Veröffentlichungstag der Anmeldung: 15.04.2009
(73) Patentinhaber: Deutsches Zentrum für Luft- und Raumfahrt e.V., 51147 Köln (DE)
(72) Erfinder: PFAHL, Andreas, 38855 Wernigerode (DE); BUCK, Reiner, 70563 Stuttgart (DE); REHSCHUH, Karsten, 89518 Heidenheim a.d. Brenz (DE)
(74) Vertreter: Hoeger, Stellrecht & Partner Patentanwälte mbB
(86) Internationale Anmeldenummer: PCT/EP2007/061920
(87) Internationale Veröffentlichungsnummer: WO 2008/058866

(56) Entgegenhaltungen:
- DE-A1- 2 700 313
- DE-A1- 19 707 461
- FR-A- 2 340 576
- GB-A- 2 329 976
- KR-A- 20010 009 349
- US-A- 4 013 885
- US-A- 4 211 922
- US-A- 4 999 483
- US-A1- 2003 045 949
- US-A1- 2005 274 376

## Beschreibung

Die Erfindung betrifft ein Verfahren zur Regelung der Ausrichtung eines Heliostaten auf einen Receiver.

Die Erfindung betrifft ferner eine Heliostatenvorrichtung, umfassend eine bewegliche Spiegeleinrichtung.

Weiterhin betrifft die Erfindung ein Solarkraftwerk, welches mindestens einen Receiver und mindestens eine Heliostatenvorrichtung umfasst.

Solarkraftwerke mit einem Turmreceiver sind beispielsweise aus der US 4,564,275 und der US 4,586,488 bekannt.

Aus der US 4,211,922 ist ein Heliostatensystem bekannt, welches eine Linse aufweist, welche ein Linienbild herstellt. Ein Multielement-Fotosensor ist hinter einem Spiegel angeordnet in der Art, dass ein Bild der Sonne und ein Bild eines Empfängers auf den Fotosensor fokussierbar sind.

Aus der US 4,013,885 ist eine Vorrichtung zur Verwendung in der Positionierung von individuell steuerbaren Spiegeln, welche beabstandet zu einem Solarempfänger sind, bekannt. Jeder Spiegel weist einen Reflektor mit einer Öffnung auf. Es ist eine Abbildungsfläche hinter dem Reflektor gebildet. Ein weiterer Reflektor ist dahinter angeordnet, welcher die Öffnung umgibt. Es ist ein Detektor vorgesehen, welcher auf einer Linie von einem Solarempfänger durch die Öffnung liegt, um die Konzentrizität der Bilder der Sonne im sichtbaren Bereich des elektromagnetischen Spektrums, wie sie von der Abbildungsoberfläche reflektiert werden.

Aus der US 2005/0274376 A1 ist ein Detektionssystem zur Bestimmung des Positionsfehlers eines Heliostaten relativ zu einem Empfänger bekannt.

Durch einen oder mehrere Heliostate wird Solarstrahlung auf den Receiver gerichtet. Aufgrund der Sonnenwanderung sind Heliostate der Sonne nachzuführen.

Der Erfindung liegt die Aufgabe zugrunde, ein Verfahren der eingangs genannten Art bereitzustellen, mittels welchem die Ausrichtung und Nachführung der Spiegeleinrichtung eines Heliostaten auf einfache und kostengünstige Weise ermöglicht wird.

Diese Aufgabe wird erfindungsgemäß durch die Merkmale des Anspruchs 1 gelöst.

An einer Spiegelfläche einer Spiegeleinrichtung des Heliostaten ist eine zweidimensionale Bildsensoreinrichtung angeordnet und der Heliostat wird mittels der Bildsensoreinrichtung über Bilderkennung an einem zweidimensionalen Bild so ausgerichtet, dass ein erster Winkel eines ersten Vektors, welcher zur Sonne zeigt, relativ zu einem vorgegebenen Vektor der Spiegeleinrichtung und ein zweiter Winkel eines Vektors, welcher zu einem vorgegebenen Zielbereich des Receivers zeigt, relativ zu dem vorgegebenen Vektor in einem von dem vorgegebenen Vektor der Spiegeleinrichtung abhängigen Verhältnis zueinander stehen, wobei Bilder der Sonne und des vorgegebenen Zielbereichs und ihre relative Lage zu dem vorgegebenen Vektor ermittelt werden, wobei die Kontur einer Sonnenabbildung detektiert.wird. Bei der erfindungsgemäßen Lösung wird durch Bildauswertung an einem zweidimensionalen Bild detektiert, ob ein Heliostat richtig ausgerichtet ist und gegebenenfalls wird unter Zugrundelegung des Detektionsergebnisses eine Nachführung durchgeführt. Die Bildsensoreinrichtung lässt sich auf einfache und kostengünstige Weise realisieren. Beispielsweise können in Digitalkameras zum Einsatz kommende Bildsensoreinrichtungen verwendet werden.

Als Regelgröße können die Koordinaten von Bildern der Sonne und des vorgegebenen Zielbereichs verwendet werden. Es ist dann beispielsweise nicht notwendig, die Position der Spiegeleinrichtung über Winkelgeber zu ermitteln. Durch das erfindungsgemäße Verfahren ist es auch möglich, eine Nachführung des Heliostaten bei Wolkenbedeckung zu erreichen. Anstatt eines realen Bilds kann ein "virtuelles" Bild der Sonne verwendet werden, welches über einen Algorithmus zur Ermittlung der Sonnenbewegung generiert wird. Es lassen sich Koordinaten eines erwarteten Sonnenbilds erzeugen, die weiter verarbeitet werden können.

Der Zielbereich des Receivers erzeugt eine Abbildung und die Sonne erzeugt eine Abbildung. Dem vorgegebenen Vektor ist ein bestimmter Pixel oder ein bestimmter Pixelbereich an der Bildsensoreinrichtung zugeordnet. Die Anzahl der Pixel, die die Abbildung des Zielbereichs von dem oder den dem vorgegebenen Vektor zugeordneten Pixeln entfernt ist, ist ein Maß für die Lage des Zielbereichs des Receivers relativ zu dem vorgegebenen Vektor der Spiegeleinrichtung. Auf die gleiche Weise ist die Anzahl der Pixel, die die Abbildung der Sonne zu dem oder den Pixeln, welche dem vorgegebenen Vektor zugeordnet sind, entfernt ist, ein Maß für die Lage der Sonne relativ zu dem vorgegebenen Vektor der Spiegeleinrichtung. Über die Koordinaten im Bild ist dann eine einfache Regelung möglich, um ein bestimmtes Verhältnis des ersten und des zweiten Winkels zu dem vorgegebenen Vektor einzustellen.

Durch das erfindungsgemäße Verfahren ist eine einfache Kalibrierung des Systems möglich. Die Fehlermöglichkeiten, die bei der Kalibrierung zu berücksichtigen sind, lassen sich gering halten.

Das Regelungsverfahren lässt sich mit großer Genauigkeit des Regelungsergebnisses durchführen.

Es ist insbesondere vorgesehen, dass der vorgegebene Vektor der Spiegeleinrichtung ein Normalenvektor zu einer Spiegelfläche ist. Dadurch lässt sich die relative Lage zu dem vorgegebenen Vektor auf einfache Weise ermitteln. Beispielsweise ist der vorgegebene Vektor durch einen festliegenden Punkt in dem Bild, welches durch Bilderkennung ausgewertet wird, realisiert. Insbesondere wird dann der Heliostat so ausgerichtet, dass der erste Winkel und der zweite Winkel betragsmäßig im Wesentlichen gleich sind. Dadurch ist eine einfache Auswertung möglich. Beispielsweise kann dann aus der Lage eines Mittelpunkts einer Verbindungslinie zwischen dem Bild der Sonne und dem Bild des Zielbereichs ermittelt werden, ob eine Nachführung notwendig ist oder nicht und wie gegebenenfalls die Nachführung durchzuführen ist. Günstig ist es, wenn die Bildsensoreinrichtung an einer Spiegelfläche der Spiegeleinrichtung angeordnet wird. Dadurch lässt sich die Regelung auf einfache Weise durchführen. Durch die Koordinaten von Abbildungen der Sonne und des Zielbereichs an dem durch die Bildsensoreinrichtung erzeugten Bild lässt sich auf einfache Weise die Positionierung der Spiegeleinrichtung relativ zur Sonne und zum Zielbereich ermitteln. Die Bildsensoreinrichtung ist als zweidimensionale Bildsensoreinrichtung ausgebildet. Es wird dann ein zweidimensionales Bild erzeugt, welches durch Bilderkennung auf einfache Weise auswertbar ist. Günstig ist es, wenn der Bildsensoreinrichtung eine optische Abbildungseinrichtung zugeordnet wird. Dadurch ist gewährleistet, dass ein Bild erzeugt wird, wobei die Position von Abbildungen der Sonne und des Zielbereichs auswertbar sind.

Es kann vorgesehen sein, dass die optische Abbildungseinrichtung eine spektral selektive Charakteristik aufweist. Beispielsweise umfasst die optische Abbildungseinrichtung dazu einen oder mehrere spektral selektive Filter. Dadurch ist es möglich, dass nur bestimmte Wellenlängenbereiche für die Bilderkennung genutzt werden. Auf diese Weise kann gegebenenfalls der Unterschied zwischen der Intensität des Sonnenlichts und der Intensität des an dem Zielbereich des Receivers reflektierten Lichts in erheblichem Maße reduziert wird.

Grundsätzlich ist es möglich, dass die Abbildungseinrichtung durch ein Linsensystem realisiert ist. Wenn die optische Abbildungseinrichtung mindestens eine Lochblende umfasst und insbesondere durch eine Lochblende gebildet ist, dann entstehen keine Regelungsungenauigkeiten aufgrund optischer Fehler des Linsensystems.

Es kann vorgesehen sein, dass die optische Abbildungseinrichtung eine Mehrzahl von Teilabbildungseinrichtungen aufweist, durch welche jeweils ein Teilwinkelbereich abgebildet wird. Eine bestimmte Teilabbildungseinrichtung ist dann für einen bestimmten Teilwinkelbereich verantwortlich. Es ist dabei grundsätzlich möglich, dass schaltbar ist, welche Teilabbildungseinrichtung aktiv, d. h. wirksam, ist. Die Teilabbildungseinrichtungen sind dabei getrennte Unterabbildungseinrichtungen der optischen Abbildungseinrichtung. Beispielsweise ist eine erste Lochblende mit einem Loch vorgesehen, welches für einen Bildbereich für Winkel zwischen -45° bis +45° zuständig ist. Es kann eine weitere Teilabbildungseinrichtung vorgesehen sein, welche als Lochblende ausgebildet ist mit zwei nebeneinanderliegenden Löchern mit einem Bildbereich von beispielsweise -80° bis -45°. Diese Teilabbildungseinrichtung kann eine Umlenkoptik umfassen.

Es kann auch vorgesehen sein, dass eine Teilabbildungseinrichtung so ausgebildet ist, dass mittels der Bildsensoreinrichtung erkannt wird, ob sie aktiv ist oder nicht. Die Teilabbildungseinrichtung weist dann bestimmte Merkmale auf, die die Bildsensoreinrichtung erkennen kann, um die Auswertung zu erleichtern. Die Merkmale können dabei beispielsweise optische Merkmale sein oder es kann sich auch um elektronische Signaturen handeln, die über eine Steuerungs-/Regelungseinrichtung erkennbar sind.

Günstig ist es, wenn die Bildsensoreinrichtung so angeordnet und ausgebildet wird, dass in allen relevanten Betriebspunkten die Sonne und der vorgegebene Zielbereich abgebildet werden. Dadurch ist eine Regelung der Nachführung in allen relevanten Betriebspunkten möglich.

Es ist insbesondere günstig, wenn die Bildsensoreinrichtung in einem mittleren Bereich einer Spiegelfläche der Spiegeleinrichtung fest positioniert wird. Dadurch ergibt sich ein optimierter Arbeitsbereich. In dem mittleren Bereich der Spiegelfläche liegen üblicherweise die geringsten Verformungen aufgrund Schwerkraft und Windlasten vor.

Es kann vorgesehen sein, dass an dem Receiver und/oder an einem Heliostatenfeld eine oder mehrere Markierungen für die Bilderkennung mittels der Bildsensoreinrichtung positioniert sind. Dadurch lässt sich die Erzeugung eines Abbilds des Zielbereichs durch die Bildsensoreinrichtung gegebenenfalls verbessern.

Die Markierung oder Markierungen können über passive Elemente und/oder aktive Elemente gebildet werden. Bei der Realisierung über passive Elemente wie beispielsweise helle Anstriche lässt sich der Receiver entsprechend einfach ausbilden. Bei der Realisierung über aktive Elemente wie beispielsweise über Lampen lässt sich die Bilderkennung des Zielbereichs des Receivers unter Umständen verbessern.

Beispielsweise sind die Markierung oder Markierungen durch eine helle mindestens teilweise Umrandung am Zielbereich des Receivers gebildet. Es wird dadurch eine Art von Referenzfläche bereitgestellt, durch die die Bilderkennung erleichtert ist. Es lässt sich insbesondere eine definierte Abbildung des Zielbereichs herstellen.

Es ist beispielsweise alternativ oder zusätzlich auch möglich, dass die Markierung oder Markierungen über ein oder mehrere aktive Leuchtelemente gebildet werden. Beispielsweise können Lampen oder Leuchtdioden vorgesehen sein, welche an oder in der Nähe des Zielbereichs des Receivers angeordnet sind. Wenn entsprechende insbesondere schmalbandig emittierende Leuchtelemente vorgesehen sind, wobei die Bildsensoreinrichtung dann nur den schmalbandigen Wellenlängenbereich registrieren muss, dann kann die Differenz der Intensität zwischen dem Sonnenlicht und der Intensität der Markierung reduziert werden.

Ganz besonders vorteilhaft ist es, wenn mit der Bildsensoreinrichtung eine erste Bildaufnahme für die Sonne und eine zweite Bildaufnahme für den Receiver durchgeführt wird. Durch die Trennung der Bildaufnahmen für die Sonne und für den Receiver können die unterschiedlichen Helligkeiten berücksichtigt werden.

Insbesondere sind die erste Bildaufnahme und die zweite Bildaufnahme zeitlich beabstandet. Es ist dabei grundsätzlich unwesentlich, welche Bildaufnahme zuerst durchgeführt wird.

Weiterhin vorteilhaft ist es, wenn die erste Bildaufnahme mit einer kürzeren Belichtungszeit als die zweite Bildaufnahme durchgeführt wird. Dadurch lässt sich die größere Helligkeit der Sonne berücksichtigen.

Insbesondere ist eine Regelgröße die relative Lage des Bildes der Sonne und des Bildes des Zielbereichs des Receivers zu dem vorgegebenen Vektor. Die Regelgröße ist diejenige Größe, welche geregelt wird. Regelziel ist es, die Regelgröße in einen bestimmten Bereich zu bringen. Insbesondere ist es das Ziel, die Bilder der Sonne und des Zielbereichs des Receivers in eine bestimmte relative Position zu dem vorgegebenen Vektor zu bringen. Der vorgegebene Vektor ist insbesondere durch einen Bildpunkt in einem Bild der Bildsensoreinrichtung realisiert. Dieser Bildpunkt kann dabei eine tatsächliche Abbildung sein oder ein beispielsweise durch einen Kalibrierungsvorgang ermittelter virtueller Punkt, welcher durch bestimmte Koordinaten charakterisiert ist.

Bei einer regelungstechnisch einfachen Ausführungsform ist eine Regelgröße die Lage eines bestimmten Punkts auf einer Verbindungslinie zwischen einem Bild der Sonne und einem Bild des Zielbereichs des Receivers. Dieser bestimmte Punkt, welcher beispielsweise der Mittelpunkt ist, lässt sich durch Bilderkennung auf einfache Weise ermitteln.

Insbesondere wird die Regelung so durchgeführt, dass der bestimmte Punkt auf einer vorgegebenen Bildkurve oder an einem vorgegebenen Bildpunkt liegt. Unter Bildkurve bzw. Bildpunkt ist dabei eine Kurve bzw. ein Punkt im Bild zu verstehen. Die Regelung wird so durchgeführt, dass der bestimmte Punkt in den vorgegebenen Bereich gebracht wird.

Insbesondere ist der bestimmte Punkt der Mittelpunkt der Verbindungslinie.

Die Regelung lässt sich auf einfache Weise durchführen, wenn es das Ziel ist, dass der Mittelpunkt im Wesentlichen an der gleichen Position im Bild liegt, das heißt die Spiegeleinrichtung wird so nachgeführt, dass der Mittelpunkt im Rahmen der Regelungsgenauigkeit stets an der gleichen Stelle im Bild liegt.

Insbesondere wird aus einer Abweichung einer Regelgröße von einem SollWert eine Nachführungsposition für die Spiegeleinrichtung ermittelt. Dadurch lässt sich die Nachführung der Spiegeleinrichtung auf einfache und schnelle Weise durchführen.

Günstig ist es, wenn ein Steuerungsmodus vorgesehen ist, in welchem die Sonnenposition und/oder eine Sollposition der Spiegeleinrichtung berechnet wird. Durch Wolkenbedeckung der Sonne kann unter Umständen keine Abbildung der Sonne durch die Bildsensoreinrichtung erzeugt werden, welche über Bilderkennung auswertbar ist. In diesem Fall ist es günstig, wenn in einen Steuerungsmodus übergegangen wird, in welchem die Sonnenposition und/oder Sollposition der Spiegeleinrichtung berechnet wird. Im ersten Falle erzeugt die Steuerungs-/Regelungseinrichtung eine virtuelle Abbildung der Sonne für die Bilderkennung. Es werden Koordinaten für die Sonnenabbildung aufgrund der berechneten Sonnenposition vorgegeben. Es ist beispielsweise auch möglich, dass für die Grobsteuerung bei Wolkendurchgang die Sollposition der Spiegeleinrichtung über eine Berechnung der Geschwindigkeiten von Antriebsmotoren einer Antriebseinrichtung erfolgt. Es ist auch möglich, beispielsweise mittels der Uhrzeit die Sollposition der Spiegeleinrichtung zu ermitteln.

Insbesondere wird dann im Steuerungsmodus ein Bild des Zielbereichs des Receivers ermittelt und die berechnete Sonnenposition und/oder Sollposition der Spiegeleinrichtung wird für die Nachführung der Spiegeleinrichtung verwendet. Die Regelgröße wird dann über die berechnete Sonnenposition und das detektierte Bild des Zielbereichs des Receivers gesteuert.

Es ist günstig, wenn die Kontur einer Sonnenabbildung gemessen wird, um zu prüfen, ob die Regelung der Ausrichtung der Spiegeleinrichtung mit Hilfe der Abbildung der Sonne möglich ist. Dadurch lässt sich auf einfache Weise feststellen, ob das Sonnensignal, welches durch die Bildsensoreinrichtung geliefert ist, ausreichend ist, um eine Regelung mit Hilfe der Abbildung durchzuführen. Wenn dies nicht der Fall ist, kann in einen Steuerungsmodus übergegangen werden, in dem durch Berechnung des Sonnenstands ein virtuelles Bild erzeugt wird.

Günstig ist es, wenn ein Kalibrierungsvorgang vorgesehen wird, bei welchem die Koordinaten eines dem vorgegebenen Vektor der Spiegeleinrichtung zugeordneten Bildes ermittelt werden. Dieses Bild muss dabei kein reales Bild sein. Durch den Kalibrierungsvorgang werden Koordinaten für den vorgegebenen Vektor ermittelt, die bei der Bilderkennung und Bildauswertung berücksichtigt werden können.

Der Erfindung liegt ferner die Aufgabe zugrunde, eine Heliostatenvorrichtung der eingangs genannten Art bereitzustellen, bei welcher die Spiegeleinrichtung auf einfache Weise der Sonne nachführbar ist.

Diese Aufgabe wird erfindungsgemäß durch die Merkmale des Anspruchs 13 gelöst.

Eine zweidimensionale Bildsensoreinrichtung ist vorgesehen, welche an der Spiegelfläche einer Spiegeleinrichtung angeordnet ist, und eine Steuerungs-/Regelungseinrichtung ist vorgesehen, wobei die Spiegeleinrichtung mittels der Bildsensoreinrichtung und der Steuerungs-/Regelungseinrichtung über Bilderkennung einer Abbildung der Sonne und einer Abbildung eines Zielbereichs eines Receivers gemäß dem Verfahren nach Anspruch 1 ausrichtbar ist, wobei die Kontur einer Sonnenabbildung detektiert wird. Vorteile der erfindungsgemäßen Heliostatenvorrichtung wurden bereits im Zusammenhang mit dem erfindungsgemäßen Verfahren erläutert.

Vorteilhafte Ausführungsformen der erfindungsgemäßen Heliostatenvorrichtung wurden ebenfalls bereits im Zusammenhang mit dem erfindungsgemäßen Verfahren erläutert.

Günstig ist es, wenn die Spiegeleinrichtung um mindestens zwei Achsen drehbar ist. Dadurch ist eine optimale Ausrichtung und Nachführung der Spiegeleinrichtung ermöglicht.

Ferner günstig ist es, wenn eine Antriebseinrichtung zur Bewegung der Spiegeleinrichtung vorgesehen ist. Dadurch lässt sich die Ausrichtung insbesondere automatisiert durchführen. Dadurch, dass die Bildsensoreinrichtung als zweidimensionale Bildsensoreinrichtung ausgebildet ist, stellt die Bildsensoreinrichtung dann ein zweidimensionales Bild bereit, welches auf einfache Weise auswertbar ist. Insbesondere lassen sich die Koordinaten einer Abbildung der Sonne und einer Abbildung eines Zielbereichs eines Receivers auf einfache Weise ermitteln und insbesondere in Relation zu einem bestimmten Punkt im Bild, welcher beispielsweise durch einen vorgegebenen Vektor der Spiegeleinrichtung definiert ist, bestimmen.

Günstig ist es, wenn die Bildsensoreinrichtung eine Normalenrichtung aufweist, welche parallel zu einer Normalenrichtung einer Spiegelfläche der Spiegeleinrichtung ist. Je geringer die Schrägstellung der Bildsensoreinrichtung zu der Spiegelfläche ist, umso einfacher lässt sich ein Regelungsverfahren für die Ausrichtung durchführen.

Ganz besonders vorteilhaft ist es, wenn der Bildsensoreinrichtung eine optische Abbildungseinrichtung zugeordnet ist, um Abbildungen der Sonne und eines Zielbereichs des Receivers zu erzeugen.

Es kann günstig sein, wenn die optische Abbildungseinrichtung eine spektral selektive Charakteristik aufweist. Beispielsweise weist die optische Abbildungseinrichtung einen oder mehrere spektral selektive Filter auf. Dadurch ist es möglich, nur bestimmte Wellenlängenbereiche zu nutzen; bei entsprechender Ausbildung beispielsweise von Filtern kann dadurch die Differenz zwischen der Intensität des Sonnenlichts und der Intensität des von dem Zielbereich des Receivers kommenden Lichts reduziert werden.

Bei einer günstigen Ausführungsform umfasst die optische Abbildungseinrichtung mindestens eine Lochblende bzw. ist durch eine Lochblende gebildet. Dadurch entfallen optische Fehler eines Linsensystems, so dass eine einfache und genaue Regelung der Ausrichtung der Spiegeleinrichtung möglich ist.

Es kann vorgesehen sein, dass die optische Abbildungseinrichtung eine Mehrzahl von Teilabbildungseinrichtungen aufweist, durch welche jeweils Teilwinkelbereiche abbildbar sind. Dadurch ist eine optimierte Anpassung möglich. Die Bilderkennung lässt sich optimieren, indem für bestimmte Winkelbereiche optimierte Abbildungsverhältnisse realisiert werden.

Ganz besonders vorteilhaft ist es, wenn die Bildsensoreinrichtung so angeordnet und ausgebildet ist, dass in allen relevanten Betriebspunkten die Sonne und der vorgegebene Zielbereich des Receivers abbildbar sind. Dadurch erhält man eine genaue Regelung der Ausrichtung und Nachführung der Spiegeleinrichtung.

Es ist dann günstig, wenn die Bildsensoreinrichtung in einem mittleren Bereich einer Spiegelfläche der Spiegeleinrichtung fest positioniert ist. Dadurch lässt sich ein großer Bereich auf einfache Weise erfassen. Die Verformungen der Spiegeleinrichtung aufgrund Schwerkraft und Windlasten sind im mittleren Bereich am geringsten.

Ganz besonders vorteilhaft ist es, wenn die Steuerungs-/Regelungseinrichtung eine Bilderkennungseinrichtung umfasst. Durch sie können die von der Bildsensoreinrichtung bereitgestellten, zweidimensionalen Bilder ausgewertet werden. Es können die Koordinaten von Abbildungen der Sonne und eines Zielbereichs des Receivers ermittelt werden und ihre relative Lage zu einem vorgegebenen Punkt ermittelt werden.

Ferner günstig ist es, wenn die Steuerungs-/Regelungseinrichtung eine Einrichtung zur Berechnung des Sonnenstands und/oder einer Sollposition der Spiegeleinrichtung umfasst. Dadurch kann eine virtuelle Sonnenabbildung auch bei Wolkenbedeckung der Sonne erzeugt werden, so dass auch bei Wolkenbedeckung eine einfache Nachführung der Spiegeleinrichtung möglich ist. Beispielsweise ist es möglich, dass der Sonnenstand aus bekannten Algorithmen zur Sonnenwanderung berechnet wird. Es ist auch möglich, dass die Sollposition der Spiegeleinrichtung mittels der Uhrzeit berechnet wird oder über eine Berechnung der Geschwindigkeit von Antriebsmotoren einer Antriebseinrichtung zur Bewegung der Spiegeleinrichtung erfolgt.

Ferner günstig ist es, wenn die Steuerungs-/Regelungseinrichtung eine Einrichtung zur Steuerung einer Aufnahmezeit der Sonne und des Zielbereichs des Receivers umfasst. Durch die Einrichtung zur Steuerung einer Aufnahmezeit kann die unterschiedliche Helligkeit der Sonne und des Zielbereichs berücksichtigt werden. Dadurch lässt sich die Bildauswertung verbessern, da jeweils die durch die Bildauswertung optimierte Abbildungen der Sonne und des Zielbereichs erzeugbar sind.

Der Erfindung liegt ferner die Aufgabe zugrunde, ein Solarkraftwerk der eingangs genannten Art bereitzustellen, bei welchem die Solarstrahlungsbeaufschlagung des mindestens einen Receivers auf einfache Weise optimierbar ist.

Diese Aufgabe wird erfindungsgemäß dadurch gelöst, dass die mindestens eine Heliostatenvorrichtung erfindungsgemäß ausgebildet ist.

Das erfindungsgemäße Solarkraftwerk weist die bereits im Zusammenhang mit der erfindungsgemäßen Heliostatenvorrichtung erläuterten Vorteile auf.

Günstig ist es, wenn der mindestens eine Receiver und/oder ein Heliostatenfeld eine oder mehrere Markierungen für die Bilderkennung mittels der Bildsensoreinrichtung an der mindestens einen Heliostatenvorrichtung umfasst. Dadurch wird die Bilderkennung für die Abbildung eines Zielbereichs des Receivers, welcher durch die Bildsensoreinrichtung erzeugt ist, verbessert.

Die Markierung oder Markierungen sind beispielsweise durch eine helle mindestens teilweise Umrandung an einem Zielbereich des Receivers gebildet.

Ferner günstig ist es, wenn der mindestens eine Receiver eine oder mehrere Markierungen für eine Kalibrierung der Heliostatenvorrichtung aufweist. Die Markierung oder Markierungen sind beispielsweise in einem getrennten Kalibrierungs-Zielbereich des Receivers angeordnet. Es lässt sich dadurch beispielsweise auf einfache Weise die Position eines Brennflecks auf dem Kalibrierungs-Zielbereich bestimmen, um die Kalibrierung zu erleichtern.

Günstig ist es, wenn der mindestens eine Receiver ein Turmreceiver ist. Dadurch ist es auf einfache Weise möglich, die von der mindestens einen Heliostatenvorrichtung reflektierte Solarstrahlung auf den Receiver zu richten.

Die nachfolgende Beschreibung bevorzugter Ausführungsformen dient im Zusammenhang mit der Zeichnung der näheren Erläuterung der Erfindung. Es zeigen:
- Figur 1:: eine schematische Darstellung eines Ausführungsbeispiels eines Solarkraftwerks mit einem Receiver und einer Heliostatenvorrichtung;
- Figur 2:: eine vergrößerte Darstellung des Bereichs A gemäß Figur 1;
- Figur 3:: ein Blockschaltbild eines Ausführungsbeispiels einer erfindungsgemäßen Heliostatenvorrichtung; und
- Figuren 4(a), (b), (c):: schematisch verschiedene Bilder (Abbildungen von Sonne, Zielbereich eines Receivers und eines Referenzpunktes) für unterschiedliche Situationen: Figur 4(a) zeigt einen Kalibrierungsvorgang, Figur 4(b) zeigt eine nicht richtige Ausrichtung und Figur 4(c) zeigt eine richtige Ausrichtung einer Spiegeleinrichtung eines Heliostaten.

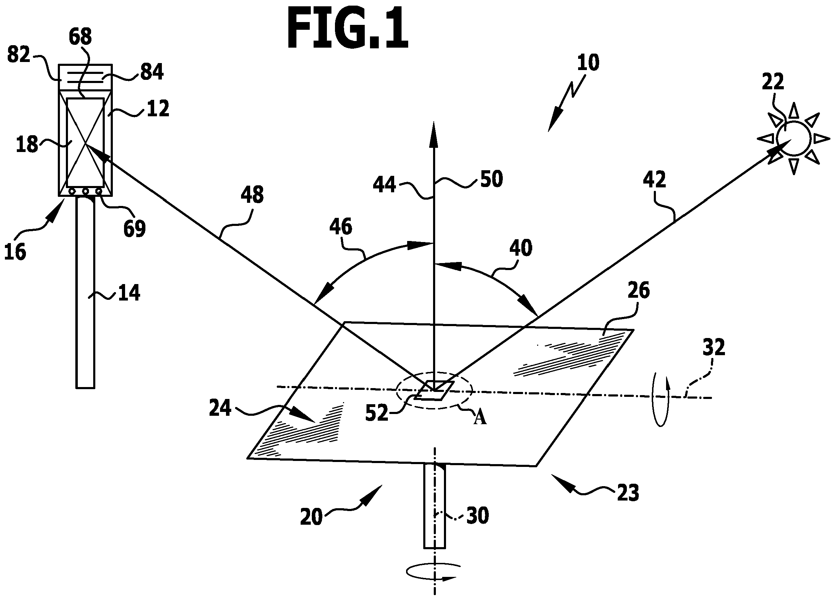

Ein Ausführungsbeispiel eines Solarkraftwerks, welches in Figur 1 in einer Teildarstellung schematisch gezeigt und dort mit 10 bezeichnet ist, umfasst (mindestens) einen Receiver 12, welcher beispielsweise an einem Turm 14 angeordnet ist und als Turmreceiver 16 ausgebildet ist. Der Receiver 12 weist einen Zielbereich 18 auf, auf den Solarstrahlung zu richten ist. An dem Zielbereich 18 wird ein Medium über Solarstrahlung erhitzt.

Das Solarkraftwerk 10 umfasst weiterhin eine Mehrzahl von Heliostatenvorrichtungen 20. Die Heliostatenvorrichtungen 20 sind insbesondere in einem Heliostatenfeld angeordnet. Durch sie wird von der Sonne 22 kommende Solarstrahlung auf den Receiver 12 gerichtet.

Eine Heliostatenvorrichtung 20 umfasst einen Heliostaten 23 mit einer Spiegeleinrichtung 24. Die Spiegeleinrichtung 24 weist eine Spiegelfläche 26 auf, welche beispielsweise leicht sphärisch oder parabolisch gekrümmt ist.

Durch die Spiegelfläche 26 wird die Solarstrahlung auf den Zielbereich 18 gerichtet. Wenn eine Mehrzahl von Heliostaten 23 mit entsprechenden Spiegelflächen 26 vorhanden ist und diese die Solarstrahlung auf den gleichen Zielbereich 18 richten, dann liegt dort eine entsprechend hohe Strahlungsflussdichte vor. Aufgrund der Sonnenwanderung müssen die Spiegeleinrichtungen 24 der Heliostate 23 nachgeführt werden, um die Solarstrahlung "permanent" während der Sonnenscheindauer auf den Zielbereich 18 richten zu können.

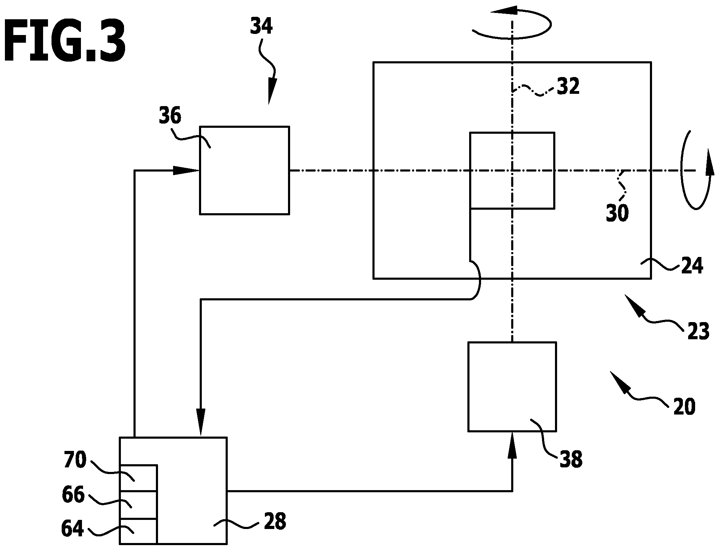

Die Heliostatenvorrichtung 20 umfasst dazu eine Steuerungs-/Regelungseinrichtung 28 (Figur 3). Die Spiegeleinrichtung 24 ist um mindestens zwei Achsen 30, 32 beweglich, um eine Nachführung zu ermöglichen. Insbesondere ist die Spiegeleinrichtung 24 um diese Achsen 30, 32 mindestens in einem Teilwinkel von 360° drehbar bzw. schwenkbar. Die Heliostatenvorrichtung 20 umfasst dazu eine Antriebseinrichtung 34 beispielsweise mit einem ersten Antriebsmotor 36, welcher der Achse 30 zugeordnet ist, und einen zweiten Antriebsmotor 38, welcher der Achse 32 zugeordnet ist. Die Steuerungs-/Regelungseinrichtung 28 steuert die Antriebseinrichtung 34 an, um die Spiegeleinrichtung 24 eines Heliostaten 23 auszurichten und nachzuführen.

Es ist möglich, dass jedem Heliostaten 23 eine eigene Steuerungs-/Regelungseinrichtung 28 zugeordnet ist, oder dass mehreren Heliostaten 23 eine gemeinsame Steuerungs-/Regelungseinrichtung 28 zugeordnet ist.

Die Spiegeleinrichtung 24 mit ihrer Spiegelfläche 26 ist so auszurichten, dass ein erster Winkel 40, welcher zwischen einem ersten Vektor 42, welcher von der Spiegelfläche 26 ausgehend zu der Sonne 22 zeigt, bezogen auf einen vorgegebenen Vektor 44 der Spiegeleinrichtung 24, und ein zweiter Winkel 46 zwischen einem zweiten Vektor 48, welcher ausgehend von der Spiegeleinrichtung 24 zu dem Zielbereich 18 zeigt, in einem bestimmten vorgegebenen Verhältnis zueinander stehen. Wenn der vorgegebene Vektor 44 ein Normalenvektor 50 der Spiegelfläche 26 ist, dann ist die Spiegeleinrichtung 24 so auszurichten, dass der erste Winkel 40 und der zweite Winkel 46 betragsmäßig gleich groß sind. (Der erste Vektor 42, der vorgegebene Vektor 44 und der zweite Vektor 48 gehen von einem gemeinsamen Punkt auf der Spiegelfläche 26 aus.)

An der Spiegeleinrichtung 24 ist eine Bildsensoreinrichtung 52 angeordnet. Diese ist zweidimensional ausgebildet, so dass ein zweidimensionales Bild geliefert wird. Sie ist so ausgebildet, dass Bilderkennungsvorgänge bzw. Bildauswertungsvorgänge möglich sind. Die Bildsensoreinrichtung 52 umfasst beispielsweise einen kommerziell erhältlichen Digitalkamera-Chip wie einen CCD-Chip oder CMOS-Chip.

Die Bildsensoreinrichtung 52 ist flächig an der Spiegeleinrichtung 24 angeordnet. Insbesondere liegt sie in einem mittleren Bereich, wobei der Ausgangspunkt der Vektoren 42, 44 und 48 an der Bildsensoreinrichtung 52 liegt. Eine Normale der Bildsensoreinrichtung 52 ist parallel zum Normalenvektor 50. Die Bildsensoreinrichtung 52 ist vorzugsweise parallel zu der Spiegelfläche 26 ausgerichtet. Eine Schrägstellung muss gegebenenfalls in der Steuerung/Regelung korrigiert werden.

Die Bildsensoreinrichtung 52 ist so angeordnet und ausgebildet, dass in allen relevanten Betriebspositionen des Heliostaten 23 die Sonne 22 und der vorgegebene Zielbereich 18 am Receiver 12 abgebildet werden.

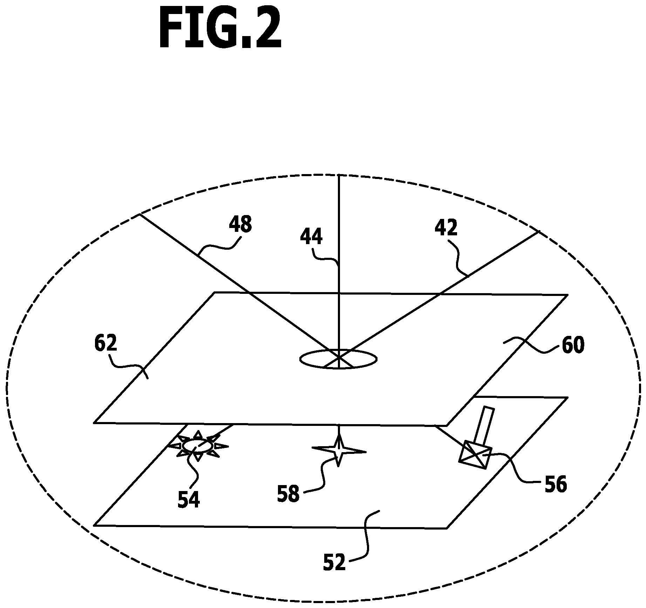

In Figur 2 ist schematisch eine Abbildung 54 der Sonne 22 und eine Abbildung 56 des Zielbereichs 18 des Receivers 12, welche von der Bildsensoreinrichtung 52 geliefert werden, gezeigt. Ferner ist eine Abbildung 58 des vorgegebenen Vektors 44 schematisch gezeigt.

Der Bildsensoreinrichtung 52 ist eine optische Abbildungseinrichtung 60 zugeordnet. Diese liegt vor der Bildsensoreinrichtung 52, das heißt die Bildsensoreinrichtung 52 liegt zwischen der optischen Abbildungseinrichtung 60 und der Spiegeleinrichtung 24. Die optische Abbildungseinrichtung 60 sorgt gerade für die Abbildung der Sonne 22 und des Zielbereichs 18 an der Bildsensoreinrichtung 52. Die optische Abbildungseinrichtung 60 umfasst beispielsweise ein Linsensystem.

Es kann vorgesehen sein, dass die optische Abbildungseinrichtung 60 (mindestens) eine Lochblende 62 umfasst. Dies hat den Vorteil, dass dann die optische Abbildungseinrichtung 60 keine optischen Fehler aufweist, wie sie beispielsweise ein Linsensystem aufweisen kann.

Die optische Abbildungseinrichtung 60 kann so ausgebildet sein, dass unterschiedliche Teilwinkelbereiche auf die optische Abbildungseinrichtung unterschiedlich abbildbar sind. Dazu umfasst die optische Abbildungseinrichtung eine Mehrzahl von getrennten Teilabbildungseinrichtungen, wobei eine Teilabbildungseinrichtung jeweils für einen bestimmten Teilwinkelbereich wirksam ist. Insbesondere sind dann die unterschiedlichen Teilabbildungseinrichtungen individuell aktivierbar, so dass die jeweils wirksame Teilabbildungseinrichtung einstellbar ist.

Es kann vorgesehen sein, dass die jeweiligen Teilabbildungseinrichtungen so ausgebildet sind, dass über die Bildsensoreinrichtung bzw. die Bildauswertung erkennbar ist, welche Teilabbildungseinrichtung jeweils aktiv ist. Beispielsweise liefert die jeweils aktive Teilabbildungseinrichtung ein optisches Signal. Es ist auch möglich, dass ein elektronisches Signal geliefert wird.

Es kann vorgesehen sein, dass die optische Abbildungseinrichtung 60 ein oder mehrere spektral selektive Elemente wie Filter aufweist. Dadurch besitzt die optische Abbildungseinrichtung 60 eine spektral selektive Charakteristik. Bei entsprechender Ausbildung lässt sich beispielsweise die Differenz zwischen der Intensität von Sonnenlicht, welches auf die Bildsensoreinrichtung 52 trifft, und der Intensität von Licht, welches von dem Zielbereich 18 auf die Bildsensoreinrichtung 52 trifft, deutlich reduzieren.

Ziel der Ausrichtung bzw. Nachführung der Spiegeleinrichtung 24 eines Heliostaten 23 ist es, dass der erste Winkel 40 und der zweite Winkel 46 gleich sind. Erfindungsgemäß erfolgt die Regelung über die Bildsensoreinrichtung 52 mittels einer Bilderkennungseinrichtung 64 der Steuerungs-/Regelungseinrichtung 28:

Durch die Bildsensoreinrichtung 52 wird die Kontur der Abbildung 54 der Sonne 22 detektiert und es erfolgt eine entsprechende Auswertung durch die Steuerungs-/Regelungseinrichtung 28. Es wird geprüft, ob eine genügend große Signalstärke vorliegt, um ein Regelungsverfahren mit Hilfe der Abbildung 54 durchzuführen. Ist dies nicht der Fall, weil insbesondere die Sonne 22 durch Wolken bedeckt ist, dann geht die Steuerungs-/Regelungseinrichtung 28 in einen Steuerungsmodus über.

Die Steuerungs-/Regelungseinrichtung 28 umfasst eine Einrichtung 66, welche zur Berechnung des Sonnenstands aus bekannten Algorithmen der Sonnenbewegung und/oder einer Sollposition der Spiegeleinrichtung 24 dient. Beispielsweise wird aus dem Kalenderdatum und der Uhrzeit über die bekannten Algorithmen der erwartete Sonnenstand berechnet. Mittels diesem berechneten Sonnenstand wird dann eine "virtuelle" Abbildung erzeugt. Diese wird mit der ermittelten Abbildung 56 des Zielbereichs 18 verglichen. Der Vergleich erfolgt dabei grundsätzlich so wie unten beschrieben.

Um eine (Grob-)Steuerung der Nachführbewegung der Spiegeleinrichtung 24 bei Wolkendurchgang zu erreichen, kann es alternativ oder zusätzlich vorgesehen sein, dass die Sollposition der Spiegeleinrichtung 24 ermittelt wird. Dies ist beispielsweise über eine Berechnung der Geschwindigkeit des ersten Antriebsmotors 36 und des zweiten Antriebsmotors 38 möglich. Es kann auch vorgesehen sein, dass mittels der tatsächlichen Uhrzeit die Sollposition der Spiegeleinrichtung 24 berechnet wird und als Regelgröße verwendet wird.

Um eine deutliche Abbildung 56 des Zielbereichs 18 zu erhalten, kann es vorgesehen sein, dass der Receiver 12 eine oder mehrere passive und/oder aktive Markierungen 68 aufweist. Eine solche Markierung 68 kann beispielsweise durch eine mindestens teilweise Umrandung des Zielbereichs 18 gebildet sein, wobei diese Umrandung hell ausgebildet ist im Vergleich zu dem restlichen Absorptionsbereich des Zielbereichs 18.

Es ist auch möglich, dass eine Markierung über ein oder mehrere Leuchtelemente 69 gebildet wird, welche an oder in der Nähe des Zielbereichs 18 des Receivers 12 angeordnet sind. Beispielsweise ist ein solches Leuchtelement 69 durch eine starke, sehr schmalbandig emittierende Lampe gebildet. An der Bildsensoreinrichtung 42 wird dann nur das entsprechend schmale Wellenlängenband genutzt. Dadurch lässt sich die Differenz zwischen der Intensität des Sonnenlichts und des von dem Zielbereich 18 des Receivers 12 stammenden Lichts reduzieren.

Wenn die Steuerungs-/Regelungseinrichtung 28 detektiert, dass mittels der Abbildung 54 die Regelung der Nachführung der Spiegeleinrichtung 24 möglich ist, dann wird die Steuerungs-/Regelungseinrichtung 28 in einem Regelungsmodus betrieben. Während der Durchführung des Steuerungsmodus wird ständig überprüft, ob die Abbildung 54 geeignet ist, um von dem Steuerungsmodus in den Regelungsmodus übergehen zu können. Entsprechend wird in dem Regelungsmodus ständig geprüft, ob die Abbildung 54 geeignet ist, um gegebenenfalls in den Steuerungsmodus übergehen zu können.

Die Bildsensoreinrichtung 52 wird so betrieben, dass eine erste Bildaufnahme der Sonne 22 mit einer begrenzten Belichtungszeit und eine zweite Bildaufnahme des Zielbereichs 18 mit einer begrenzten Belichtungszeit durchgeführt wird. Die Steuerungs-/Regelungseinrichtung 28 umfasst eine entsprechende Einrichtung 70 für die Steuerung der Aufnahmezeit. Diese Steuerung der Aufnahmezeit erfolgt sowohl im Steuerungsmodus als auch im Regelungsmodus. Die erste Bildaufnahme und die zweite Bildaufnahme erfolgen dabei nacheinander, wobei die Bildaufnahme der Sonne 22 vor oder nach der Bildaufnahme des Zielbereichs 18 erfolgen kann.

Es ist insbesondere vorgesehen, dass die Belichtungszeit für die Bildaufnahme der Sonne 22 kürzer ist als die Belichtungszeit für die Bildaufnahme des Zielbereichs 18. Durch eine zeitlich beabstandete Aufnahme des Zielbereichs 18 und der Sonne 22 kann gerade die unterschiedliche Belichtungszeit eingestellt werden, um so ein optimiertes Ergebnis zu erhalten.

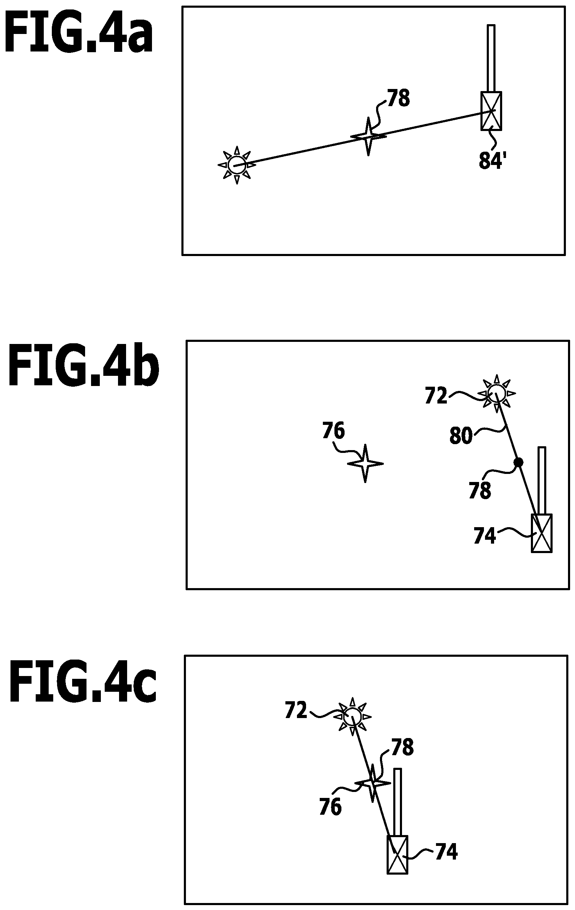

Die Bildsensoreinrichtung 52 liefert ein Bild, welches über die Bilderkennungseinrichtung 64 der Steuerungs-/Regelungseinrichtung 28 ausgewertet wird. Die Bilderkennungseinrichtung 64 bestimmt die Koordinaten der Abbildung der Sonne 22 und die Abbildung des Zielbereichs 18. In Figur 4(b) ist schematisch ein Bild gezeigt mit einer Abbildung 72 der Sonne und einer Abbildung 74 des Zielbereichs 18.

Eine Regelgröße ist insbesondere die relative Lage der Abbildungen 72 und 74 relativ zu einer Abbildung 76 des vorgegebenen Vektors 44. Bei entsprechender Anordnung der Bildsensoreinrichtung 52 an der Spiegelfläche 26 ist dabei die Abbildung 76 unabhängig von der Position der Spiegeleinrichtung 24 festliegend.

Es ist vorgesehen, dass eine Regelgröße die Lage eines Mittelpunkts 78 einer Verbindungslinie 80 zwischen der Abbildung 72 der Sonne und der Abbildung 74 des Zielbereichs 18 ist. Der Mittelpunkt 78 sollte als Regelungsziel immer an der gleichen Position liegen und insbesondere an der Abbildung 76 des vorgegebenen Vektors 44 liegen. (Die Abbildung 76 muss dabei kein reales Bild sein, sondern kann auch durch entsprechende Koordinaten vorgegeben sein.)

Bei dem in Figur 4(b) gezeigten Beispiel ist der Heliostat 23 mit seiner Spiegelfläche 26 nicht richtig ausgerichtet, da der Mittelpunkt 78 nicht an der Abbildung 76 liegt.

Es wird dann aus der Position des Mittelpunkts 78 ermittelt, wie der Heliostat 23 mit der Spiegeleinrichtung 24 nachzuführen ist. Entsprechend steuert die Steuerungs-/Regelungseinrichtung 28 die Antriebseinrichtung 34 an. Während dieses Nachführungsvorgangs kann eventuell während Unterbrechungen geprüft werden, wo der Mittelpunkt 78 liegt. Beispielsweise wird der Nachführungsvorgang schrittweise durchgeführt, wobei zwischen Nichtbewegungsphasen der Spiegeleinrichtung 24 eine Prüfung der Regelungsgröße durchgeführt wird.

In Figur 4(c) ist ein Beispiel gezeigt, bei dem der Mittelpunkt 78 als Regelgröße an der richtigen Position, nämlich an der Abbildung 76 liegt. Hier ist die Spiegeleinrichtung 24 korrekt ausgerichtet. Diese Position ist das Ziel der Regelung.

Vor der Durchführung des Regelungsvorgangs erfolgt eine Kalibrierung des Heliostats 23 mit der Bildsensoreinrichtung 52. Dazu wird beispielsweise in der Nähe des Zielbereichs 18 eine Markierung 82 angeordnet. Die Markierung umfasst beispielsweise weiße Referenzflächen. Diese sind beispielsweise in der Form von beabstandeten bilderkennungsgeeigneten Markierungsbalken ausgebildet.

Es wird ein Zielpunkt der Spiegeleinrichtung 24, welche insbesondere durch den vorgegebenen Vektor 44 bestimmt ist, auf die Markierung 82 ausgerichtet. (Die Markierung 82 bildet dadurch einen Zielbereich 84 für die Kalibrierung.)

Es wird dann die Position eines Brennflecks als Schwerpunkt der Strahlungsflussdichteverteilung auf den Zielbereich 84 und das Zentrum der Abbildung der Sonne 22 in den Bildern der Bildsensoreinrichtung 52 ermittelt. Aus diesen Koordinaten wird dann die Position des Mittelpunkts 78 bzw. der Abbildung 76 bestimmt. Dies ist in Figur 4(a) schematisch angedeutet. Mit dem Bezugszeichen 84' ist dabei die Abbildung des Zielbereichs 84 gezeigt. Die entsprechenden Koordinaten werden abgespeichert.

Es ist möglich, dass weitere Kalibrierungsvorgänge für unterschiedliche Einfallswinkel durchgeführt werden; die entsprechenden Kalibrierungsergebnisse werden abgespeichert und durch die Bilderkennungseinrichtung 64 bei der Bildauswertung im Steuerungsmodus bzw. Regelungsmodus berücksichtigt.

Die Bildsensoreinrichtung 52 lässt sich als Kamera während der Kalibrierung verwenden.

Die Bildsensoreinrichtung 52 lässt sich auf einfache und kostengünstige Weise realisieren. Es ist dabei grundsätzlich möglich, dass die Bildsensoreinrichtung 52 und die Steuerungs-/Regelungseinrichtung 28 oder zumindest Teile davon (wie beispielsweise die Bilderkennungseinrichtung 64) auf einem einzigen Chip realisiert sind.

Die erfindungsgemäße Lösung lässt sich auf einfache und kostengünstige Weise realisieren. Die Fehlermöglichkeiten bei der Kalibrierung lassen sich minimieren. Die Kalibrierung lässt sich auf einfache Weise durchführen. Die Regelung der Ausrichtung bzw. Nachführung der Spiegeleinrichtung 24 lässt sich mit hoher Genauigkeit durchführen. Ein Kalibrierungsvorgang muss unter Umständen nur einmal durchgeführt werden. Die Bildsensoreinrichtung 52 kann als Kamera für die Kalibrierung durchführt werden, so dass keine zusätzliche Kamera notwendig ist. Weiterhin ist während der Kalibrierung der Datenaustausch erleichtert.

Es ist kein zusätzliches System zur Ausrichtung/Nachführung der Spiegeleinrichtung 24 bei einem Wolkendurchgang erforderlich. Durch Berechnung des Sonnenstands ist eine optimierte Nachführung auch bei einem Wolkendurchgang möglich.

Zur Bestimmung der Ist-Position der Spiegeleinrichtung 24 eines Heliostats ist bei der erfindungsgemäßen Lösung kein Winkelgeber an einer jeweiligen Achse 30, 32 notwendig. Über die Bildsensoreinrichtung 52 und die entsprechende Bilderkennung lässt sich die Ist-Position auf einfache Weise bestimmen.

Es ist auch möglich, dass Marker nicht nur am Receiver 12 angeordnet sind, sondern auch an weiteren bekannten Positionen in einem Heliostatenfeld. Beispielsweise sind Marker an Pylonen benachbarter Heliostatenvorrichtungen 20 angeordnet. Dadurch kann der Öffnungswinkel für die Bildsensoreinrichtung 52 klein gehalten werden. Dadurch wiederum ist es möglich, eine Bildsensoreinrichtung 52 mit geringerer Auflösung (kleinerer Pixelzahl) einzusetzen. Im Tagesverlauf kann bei der Regelung ein "Entlanghangeln" von Marker zu Marker ermöglicht werden.

## Patentansprüche

1. Verfahren zur Regelung der Ausrichtung eines Heliostaten (23) auf einen Receiver (12), wobei der Heliostat (23) eine Spiegeleinrichtung (24) mit einer Spiegelfläche (26) umfasst, **dadurch gekennzeichnet, dass** eine zweidimensionale Bildsensoreinrichtung (52) an der Spiegelfläche (26) angeordnet ist, und dass der Heliostat (23) mittels der Bildsensoreinrichtung (52) über Bilderkennung an einem zweidimensionalen Bild so ausgerichtet wird, dass ein erster Winkel (40) eines ersten Vektors (42), welcher zur Sonne (22) zeigt, relativ zu einem vorgegebenen Vektor (44) der Spiegeleinrichtung (24) und ein zweiter Winkel (46) eines Vektors (48), welcher zu einem vorgegebenen Zielbereich (18) des Receivers (12) zeigt, relativ zu dem vorgegebenen Vektor (44) in einem von dem vorgegebenen Vektor (44) der Spiegeleinrichtung (24) abhängigen Verhältnis zueinander stehen, wobei Bilder der Sonne (22) und des vorgegebenen Zielbereichs (18) und ihre relative Lage zu dem vorgegebenen Vektor (44) ermittelt werden, wobei die Kontur einer Sonnenabbildung detektiert wird.

2. Verfahren nach Anspruch 1, **dadurch gekennzeichnet, dass** der Bildsensoreinrichtung (52) eine optische Abbildungseinrichtung (60) zugeordnet wird, welche insbesondere eine spektral selektive Charakteristik aufweist und/oder mindestens eine Lochblende (62) umfasst.

3. Verfahren nach einem der vorangehenden Ansprüche, **dadurch gekennzeichnet, dass** die optische Abbildungseinrichtung (60) eine Mehrzahl von Teilabbildungseinrichtungen aufweist, durch welche jeweils ein Teilwinkelbereich abgebildet wird.

4. Verfahren nach Anspruch 3, **dadurch gekennzeichnet, dass** eine Teilabbildungseinrichtung so ausgebildet ist, dass mittels der Bildsensoreinrichtung (52) erkannt wird, ob sie aktiv ist oder nicht.

5. Verfahren nach einem der vorangehenden Ansprüche, **dadurch gekennzeichnet, dass** an dem Receiver (12) und/oder einem Heliostatenfeld eine oder mehrere Markierungen (82) für die Bilderkennung mittels der Bildsensoreinrichtung (52) positioniert sind, wobei insbesondere die Markierung (82) oder Markierungen (82) über passive Elemente und/oder aktive Elemente gebildet werden und/oder die Markierung (82) oder Markierungen (82) durch eine helle mindestens teilweise Umrandung am Zielbereich des Receivers (12) gebildet sind und/oder die Markierung oder Markierungen über eine oder mehrere aktive Leuchtelemente gebildet werden.

6. Verfahren nach einem der vorangehenden Ansprüche, **dadurch gekennzeichnet, dass** mit der Bildsensoreinrichtung (52) eine erste Bildaufnahme für die Sonne (22) und eine zweite Bildaufnahme für den Receiver (12) insbesondere zeitlich beabstandet durchgeführt werden.

7. Verfahren nach Anspruch 6, **dadurch gekennzeichnet, dass** die erste Bildaufnahme mit einer kürzeren Belichtungszeit als die zweite Bildaufnahme durchgeführt wird.

8. Verfahren nach einem der vorangehenden Ansprüche, **dadurch gekennzeichnet, dass** eine Regelgröße die relative Lage des Bildes der Sonne (22) und des Bildes des Zielbereichs (18) des Receivers (12) zu dem vorgegebenen Vektor (44) ist und insbesondere eine Regelgröße die Lage eines bestimmten Punktes auf einer Verbindungslinie zwischen einem Bild der Sonne (22) und einem Bild des Zielbereichs (18) des Receivers (12) ist und insbesondere die Regelung so durchgeführt wird, dass der bestimmte Punkt auf einer vorgegebenen Bildkurve oder an einem vorgegebenen Bildpunkt liegt.

9. Verfahren nach Anspruch 8, **dadurch gekennzeichnet, dass** der bestimmte Punkt der Mittelpunkt (78) der Verbindungslinie ist und insbesondere die Regelung so durchgeführt wird, dass der Mittelpunkt (78) im Wesentlichen an der gleichen Position im Bild liegt.

10. Verfahren nach einem der vorangehenden Ansprüche, **gekennzeichnet durch** einen Steuerungsmodus, in welchem die Sonnenposition und/oder eine Sollposition der Spiegeleinrichtung (24) berechnet wird und insbesondere im Steuerungsmodus die Bilder des Zielbereichs (18) des Receivers (12) ermittelt werden und die berechnete Sonnenposition und/oder Sollposition der Spiegeleinrichtung (24) für die Nachführung der Spiegeleinrichtung (24) verwendet werden.

11. Verfahren nach einem der vorangehenden Ansprüche, **dadurch gekennzeichnet, dass** die Kontur einer Sonnenabbildung gemessen wird, um zu prüfen, ob die Regelung der Ausrichtung der Spiegeleinrichtung (24) mit Hilfe der Abbildung der Sonne möglich ist.

12. Verfahren nach einem der vorangehenden Ansprüche, **gekennzeichnet durch** einen Kalibrierungsvorgang, bei welchem die Koordinaten eines dem vorgegebenen Vektor (44) der Spiegeleinrichtung (24) zugeordneten Bildes ermittelt werden.

13. Heliostatenvorrichtung, umfassend eine bewegliche Spiegeleinrichtung (24) mit einer Spiegelfläche (26), **gekennzeichnet durch** eine zweidimensionale Bildsensoreinrichtung (52), welche an der Spiegelfläche (26) der Spiegeleinrichtung (24) angeordnet ist, eine optische Abbildungseinrichtung (60), welche der Bildsensoreinrichtung (52) zugeordnet ist, und durch eine Steuerungs-/Regelungseinrichtung (28), welche eine Bilderkennungseinrichtung (64) umfasst, wobei die Spiegeleinrichtung (24) mittels der Bildsensoreinrichtung (52) und der Steuerungs-/Regelungseinrichtung (28) über Bilderkennung einer zweidimensionalen Abbildung (54) der Sonne (22) und einer Abbildung (56) eines Zielbereichs (18) eines Receivers (12) gemäß dem Verfahren nach einem der vorangehenden Ansprüche ausrichtbar ist, wobei die Kontur einer Sonnenabbildung detektiert wird.

14. Heliostatenvorrichtung nach Anspruch 13, **dadurch gekennzeichnet, dass** die optische Abbildungseinrichtung (60) eine spektral selektive Charakteristik aufweist.

15. Solarkraftwerk, umfassend mindestens einen Receiver (12) und mindestens eine Heliostatenvorrichtung (20), durch welche Solarstrahlung auf den mindestens einen Receiver (12) richtbar ist, wobei die mindestens eine Heliostatenvorrichtung (20) gemäß Anspruch 13 oder 14 ausgebildet ist.

## Claims

1. Method for controlling the alignment of a heliostat (23) with respect to a receiver (12), the heliostat (23) comprising a mirror device (24) with a mirror surface (26), **characterized in that** a two-dimensional image sensor device (52) is arranged on the mirror surface (26), and **in that** the heliostat (23) is aligned by the image sensor device (52) using image recognition on a two-dimensional image in such a way that a first angle (40) of a first vector (42) pointing towards the sun (22), relative to a prescribed vector (44) of the mirror device (24), and a second angle (46) of a vector (48) pointing towards a prescribed target area (18) of the receiver (12), relative to the prescribed vector (44), are in a relationship to each other which is dependent upon the prescribed vector (44) of the mirror device (24), wherein images of the sun (22) and the prescribed target area (18) and their position relative to the prescribed vector (44) are determined, and wherein the contour of an image of the sun is detected.

2. Method in accordance with claim 1, **characterized in that** an optical imaging device (60) which, in particular, has a spectrally selective characteristic and/or comprises at least one aperture (62) is associated with the image sensor device (52).

3. Method in accordance with any one of the preceding claims, **characterized in that** the optical imaging device (60) comprises a plurality of partial imaging devices for respectively imaging a partial angle area.

4. Method in accordance with claim 3, **characterized in that** a partial imaging device is designed so as to enable the image sensor device (52) to recognize whether the partial imaging device is active or not.

5. Method in accordance with any one of the preceding claims, **characterized in that** one or more markings (82) for the image recognition by the image sensor device (52) is or are positioned on the receiver (12) and/or a heliostat field, wherein, in particular, the marking (82) or markings (82) is or are formed using passive elements and/or active elements and/or the marking (82) or markings (82) is or are formed by a bright, at least partial border on the target area of the receiver (12) and/or the marking or markings is or are formed by one or more active light-emitting elements.

6. Method in accordance with any one of the preceding claims, **characterized in that** a first forming of an image for the sun (22) and a second forming of an image for the receiver (12) are performed with the image sensor device (52), in particular, with a time interval between these.

7. Method in accordance with claim 6, **characterized in that** the first forming of an image is performed with a shorter exposure time than the second forming of an image.

8. Method in accordance with any one of the preceding claims, **characterized in that** a controlled variable is the position of the image of the sun (22) and of the image of the target area (18) of the receiver (12) relative to the prescribed vector (44), and, in particular, a controlled variable is the position of a certain point on a connecting line between an image of the sun (22) and an image of the target area (18) of the receiver (12), and, in particular, the control is carried out such that the certain point lies on a prescribed image curve or at a prescribed image point.

9. Method in accordance with claim 8, **characterized in that** the certain point is the midpoint (78) of the connecting line, and, in particular, the control is carried out such that the midpoint (78) lies substantially at the same position in the image.

10. Method in accordance with any one of the preceding claims, **characterized by** an adjusting mode in which the position of the sun and/or a required position for the mirror device (24) is or are calculated, and, in particular, in the adjusting mode the images of the target area (18) of the receiver (12) are determined and the calculated position of the sun and/or the calculated required position for the mirror device (24) is or are used for the adjustment of the mirror device (24).

11. Method in accordance with any one of the preceding claims, **characterized in that** the contour of an image of the sun is measured in order to check whether the control of the alignment of the mirror device (24) is possible using the image of the sun.

12. Method in accordance with any one of the preceding claims, **characterized by** a calibration procedure in which the coordinates of an image associated with the prescribed vector (44) of the mirror device (24) are determined.

13. Heliostat device, comprising a movable mirror device (24) with a mirror surface (26), **characterized by** a two-dimensional image sensor device (52) arranged on the mirror surface (26) of the mirror device (24), an optical imaging device (60) associated with the image sensor device (52) and by a control device (28) including an image recognition device (64), the mirror device (24) being alignable by the image sensor device (52) and the control device (28) using image recognition of a two-dimensional image (54) of the sun (22) and an image (56) of a target area (18) of a receiver (12) in accordance with the method in accordance with any one of the preceding claims, wherein the contour of an image of the sun is detected.

14. Heliostat device in accordance with claim 13, **characterized in that** the optical imaging device (60) has a spectrally selective characteristic.

15. Solar power plant, comprising at least one receiver (12) and at least one heliostat device (20) by means of which solar radiation is directable onto the at least one receiver (12), wherein the at least one heliostat device (20) is constructed in accordance with claim 13 or 14.

## Revendications

1. Procédé de régulation de l'orientation d'un héliostat (23) sur un récepteur (12), dans lequel l'héliostat (23) comprend un dispositif à miroir (24) présentant une surface de miroir (26), **caractérisé en ce qu'**un dispositif de détection d'image (52) bidimensionnel est agencé sur la surface de miroir (26), procédé selon lequel l'héliostat (23) est orienté par reconnaissance d'image au moyen du dispositif de détection d'image (52) sur une deuxième image bidimensionnelle, de telle sorte qu'un premier angle (40) d'un premier vecteur (42), lequel est dirigé vers le soleil (22), par rapport à un vecteur (44) prédéfini du dispositif à miroir (24) et qu'un deuxième angle (46) d'un vecteur (48), lequel est dirigé vers une deuxième zone cible (18) prédéfinie du récepteur (12), par rapport au vecteur (44) prédéfini, soient dans un rapport qui dépend du vecteur (44) prédéfini du dispositif à miroir (24), dans lequel les images du soleil (22) et de la zone cible (18) prédéfinie et leur position relative par rapport au vecteur (44) prédéfini sont déterminées, dans lequel le contour d'une reproduction du soleil est détecté.

2. Procédé selon la revendication 1, **caractérisé en ce qu'**un dispositif de reproduction optique (60), lequel présente en particulier une caractéristique de sélectivité spectrale et/ou comporte au moins un diaphragme à trou (62), est associé au dispositif de détection d'image (52).

3. Procédé selon l'une quelconque des revendications précédentes, **caractérisé en ce que** le dispositif de reproduction optique (60) comprend une pluralité de dispositifs de reproduction partielle par l'intermédiaire desquels une plage angulaire partielle est dans chaque cas reproduite.

4. Procédé selon la revendication 3, **caractérisé en ce qu'**un dispositif de reproduction partielle est réalisé de telle sorte que le dispositif de détection d'image (52) permet de reconnaître s'il est actif ou non.

5. Procédé selon l'une quelconque des revendications précédentes, **caractérisé en ce qu'**un ou plusieurs marquages (82) pour la reconnaissance d'image au moyen du dispositif de détection d'image (52) sont positionnés sur le récepteur (12) et/ou sur un champ d'héliostats, dans lequel en particulier le marquage (82) ou les marquages (82) sont formés par des éléments passifs et/ou des éléments actifs et/ou le marquage (82) ou les marquages (82) sont formés par une bordure au moins en partie claire au niveau de la zone cible du récepteur (12) et/ou le marquage ou les marquages sont formés par l'intermédiaire d'un ou de plusieurs éléments d'éclairage actifs.

6. Procédé selon l'une quelconque des revendications précédentes, **caractérisé en ce que** le dispositif de détection d'image (52) permet d'effectuer une première acquisition d'image pour le soleil (22) et une deuxième acquisition d'image pour le récepteur (12), en particulier de manière espacée dans le temps.

7. Procédé selon la revendication 6, **caractérisé en ce que** la première acquisition d'image est effectuée avec un temps d'exposition plus court que la deuxième acquisition d'image.

8. Procédé selon l'une quelconque des revendications précédentes, **caractérisé en ce qu'**une grandeur de régulation est la position relative de l'image du soleil (22) et de l'image de la zone cible (18) du récepteur (12) par rapport au vecteur (44) prédéfini et en particulier une grandeur de régulation est la position d'un point déterminé sur une ligne de liaison entre une image du soleil (22) et une image de la zone cible (18) du récepteur (12) et en particulier la régulation est effectuée de telle sorte que le point déterminé se situe sur une courbe d'image prédéfinie ou au niveau d'un point d'image prédéfini.

9. Procédé selon la revendication 8, **caractérisé en ce que** le point déterminé est le centre (78) de la ligne de liaison et en particulier la régulation est effectuée de telle sorte que le centre (78) se situe sensiblement dans la même position dans l'image.

10. Procédé selon l'une quelconque des revendications précédentes, **caractérisé par** un mode de commande dans lequel la position du soleil et/ou une position théorique du dispositif à miroir (24) sont calculées et en particulier dans le mode de commande, les images de la zone cible (18) du récepteur (12) sont déterminées et la position calculée du soleil et/ou la position théorique du dispositif à miroir (24) sont utilisées pour l'ajustement du dispositif à miroir (24).

11. Procédé selon l'une quelconque des revendications précédentes, **caractérisé en ce que** le contour d'une reproduction du soleil est mesuré, afin de vérifier si la régulation du dispositif à miroir (24) à l'aide de la reproduction de l'orientation du soleil est possible.

12. Procédé selon l'une quelconque des revendications précédentes, **caractérisé par** une procédure d'étalonnage, selon laquelle les coordonnées d'une image associée au vecteur (44) prédéfini du dispositif à miroir (24) sont établies.

13. Dispositif d'héliostat, comprenant un dispositif à miroir (24) mobile présentant une surface de miroir (26), **caractérisé par** un dispositif de détection d'image (52) bidimensionnel, lequel est agencé sur la surface de miroir (26) du dispositif à miroir (24), un dispositif de reproduction optique (60), lequel est associé au dispositif de détection d'image (52), et par un dispositif de commande/de régulation (28), lequel comprend un dispositif de détection d'image (64), dans lequel le dispositif à miroir (24) peut être orienté au moyen du dispositif de détection d'image (52) et du dispositif de commande/de régulation (28) par reconnaissance d'image d'une reproduction bidimensionnelle (54) du soleil (22) et d'une reproduction (56) d'une zone cible (18) d'un récepteur (12) d'après le procédé selon l'une quelconque des revendications précédentes, dans lequel le contour d'une reproduction du soleil est détecté.

14. Dispositif d'héliostat selon la revendication 13, **caractérisé en ce que** le dispositif de reproduction optique (60) présente une caractéristique de sélectivité spectrale.

15. Centrale solaire, comprenant au moins un récepteur (12) et au moins un dispositif d'héliostat (20), par l'intermédiaire duquel un rayonnement solaire peut être dirigé sur ledit au moins un récepteur (12), dans laquelle ledit au moins un dispositif d'héliostat (20) est réalisé selon la revendication 13 ou 14.
